# EUROPEAN PATENT APPLICATION

(11) **EP 0 699 938 A2**
(43) Date of publication of application: **06.03.1996**
(21) Application number: 95306130.6
(22) Date of filing: 01.09.1995
(51) Int. Cl.: G02F 1/1335, G02F 1/139

(54) **Liquid crystal display**

(30) Priority: 01.09.1994 GB 9417586
(71) Applicant: SHARP KABUSHIKI KAISHA, Osaka 545 (JP)
(72) Inventor: Raynes, Edward Peter, Oxford (GB); Tillin, Martin David, Abingdon, Oxon OX14 2PG (GB); Kuratate, Tomoaki, St. Clements, Oxon. OX4 1DH (GB)
(74) Representative: Robinson, John Stuart

(57) **Abstract**

A liquid crystal display comprises, in order from the viewing side, a first glass substrate 10 carrying an electrode 12, a dichroic liquid crystal layer 16 provided with suitable alignment layers 14, 18, a retarding layer 20, a reflector 24 and a second glass substrate 28 carrying an electrode 26. In use, in one of its states, the dichroic liquid crystal layer 16 absorbs a component of the light incident thereon, the transmitted component being plane polarized. The polarized light is incident upon the retarding layer 20 which converts the plane polarized light to circularly polarized light, this light being reflected and converted back to plane polarized light polarized in a direction perpendicular to the original plane of polarization on returning through the retarding layer 20. Such polarized light is absorbed by the dichroic dye, no light being transmitted by the cell towards the viewer. In another state, the dichroic dye does not absorb, and hence does not polarize, the light, the cell then transmitting light to the viewer.

## Description

This invention relates to a liquid crystal display, and particularly to a liquid crystal display capable of displaying high brightness.

One known liquid crystal display (LCD) device comprises a dichroic liquid crystal device, a quarter wave plate provided behind the device, and a metallic reflector provided behind the quarter wave plate. The dichroic liquid crystal device comprises a pair of glass substrates each of which carries a conductive electrode, a dichroic liquid crystal layer being provided between the glass substrates.

The liquid crystal device is arranged such that, when in its inactivated state, incident unpolarized light is linearly polarized on passing through the liquid crystal by the dichroic material. The linearly polarized light passes through the quarter wave plate and is thus converted to circularly polarized light. On reflection by the metallic reflector, circular polarization of the opposite handedness is induced which is converted to linearly polarized light having a polarization vector perpendicular to the originally produced polarized light on passing through the quarter wave plate, such polarized light being greatly attenuated by the dichroic liquid crystal. Therefore, in its inactivated state, relatively little of the reflected light passes through the liquid crystal and the LCD appears dark.

On activation of the liquid crystal, the dichroic material of the cell does not perform a polarizing function and the initially unpolarized incident light passes through the device and the quarter wave plate without being polarized. The light is then reflected and returns through the quarter wave plate, remaining unpolarized. The light finally passes through the liquid crystal to the observer. In its activated state, the liquid crystal cell therefore appears bright. A device of this type is disclosed in Appl. Phys. Lett. volume 30 pages 619 to 621.

Such a liquid crystal device suffers from significant parallax effects resulting in poor viewing angle properties, the parallax effects being particularly significant towards the edges of the electrodes.

According to the present invention there is provided a liquid crystal display as defined in the appended Claim 1.

Preferred embodiments of the invention are defined in the other appended claims.

The provision of the retarding layer and the reflector within the liquid crystal display "cell" reduces the separation of the liquid crystal layer from the retarding layer and the separation of the retarding layer from the reflector. The reduced separations result in a reduction in parallax effects and hence in an improvement in the viewing angle properties of the device.

The invention will further be described, by way of example, with reference to the accompanying drawings, in which:
Figure 1 is a cross sectional view of a liquid crystal display constituting a first embodiment of the invention;
Figure 2 is a simplified exploded view of the display of Figure 1;
Figure 3 is a graph showing the reflectance of the display of Figures 1 and 2 against applied voltage;
Figure 4 is a graph similar to Figure 3 showing the reflectance of the display of Figures 1 and 2 having antiparallel rubbed alignment surfaces, and the reflectance of a homeotropic display having 89° pretilt;
Figure 5 is a graph showing reflectance against wavelength of the display of Figures 1 and 2 in its inactivated state;
Figure 6 is a simplified exploded view of a display constituting a second embodiment of the invention;
Figure 7 is a graph showing reflectance against wavelength of the display of Figure 6 in its inactivated state;
Figure 8 is a simplified exploded view of a display constituting a third embodiment of the invention;
Figure 9 is a simplified exploded view of a display constituting a fourth embodiment of the invention;
Figure 10 is a graph showing reflectance against wavelength of the display of Figure 9 in its inactivated state;
Figure 11 is a simplified exploded view of a display constituting a fifth embodiment of the invention;
Figure 12 is a graph showing reflectance against wavelength of the display of Figure 11 in its inactivated state; and
Figure 13 is a simplified exploded view of a display constituting a sixth embodiment of the invention.

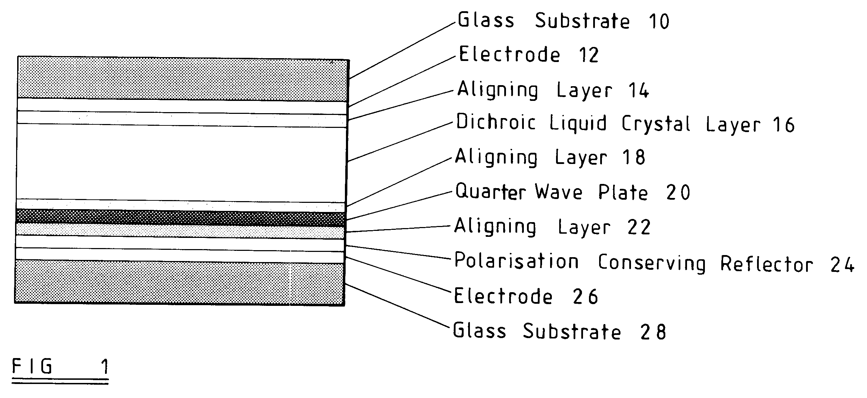

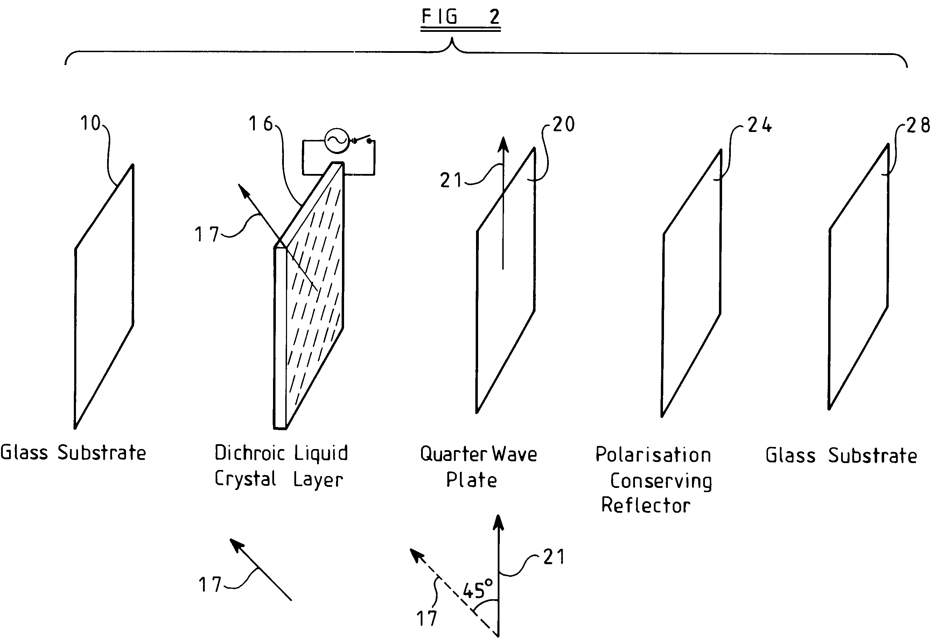

The liquid crystal display (LCD) illustrated in Figures 1 and 2 is intended to be viewed from above as illustrated in Figure 1 and from the left as illustrated in Figure 2. The cell comprises, in order from the viewing side of the cell, a first glass substrate 10, a first transparent electrode 12, a first rubbed polyimide liquid crystal aligning layer 14, and a thick dichroic liquid crystal material layer 16 which comprises a mixture of a nematic liquid crystal material and a black dichroic dye, the molecules of which align with the director of the nematic liquid crystal material. The cell further comprises a second rubbed polyimide liquid crystal aligning layer 18, a phase retarding layer 20 in the form of a quarter wave plate, an aligning layer 22 for the retarding layer 20, a polarization conserving metallic reflector 24, a second electrode 26 and a second glass substrate 28.

The aligning layers 14 and 18 are arranged with their directions of rubbing antiparallel i.e. parallel but in opposite directions. The liquid crystal material has a positive dielectric anisotropy. The surface layers of the liquid crystal material adjacent the aligning layers 14 and 18 have small but non-zero pretilt angles with respect to the plane of the cell, for instance between 1° and 10°. In the inactivated state i.e. in the absence of an electric field, the liquid crystal molecules are aligned substantially parallel to each other throughout the layer 16. In the activated state i.e. when an electric field is applied between the electrodes 12 and 26, the liquid crystal molecules in the layer 16 away from the surface layers are aligned substantially perpendicularly to the plane of the cell.

The retarding layer 20 comprises a layer of a birefringent, or double refracting, material. In the illustrated embodiment, the layer 20 comprises a liquid crystal polymer and the aligning layer 22 associated therewith comprises a rubbed polyimide layer which orientates the liquid crystal molecules of the retarding layer 20 to produce an optic axis 21 angled at 45 degrees to the director of the nematic liquid crystal material when in its inactivated state. The thickness of the retarding layer 20 is such that the product of the thickness and the birefringence is equal to, or at least approximately equal to, (2n + 1)/4 of the wavelength of the light which is to pass through the cell, ie to produce a phase retardation of approximately (2n + 1)/4 of a wavelength, where n is an integer greater than or equal to 0. For n = 0, a phase retardation of approximately one quarter of a wavelength is produced.

In use, when the cell is in its inactivated state, unpolarized light incident on the cell is polarized by the dichroic dye of the dichroic liquid crystal layer 16. In particular, the dichroic dye absorbs the component of the light having a polarization vector parallel to the long axes of the dye molecules and transmits the component having a polarization vector 17 perpendicular to the long axes of the dye molecules. The polarisation vector 17 and the optic axis 21 are illustrated below the layers 16 and 20 in Figure 2. As the molecules are aligned with the director of the nematic liquid crystal material, the long axes of the molecules are parallel to one another and the component of the light transmitted by the dichroic liquid crystal material is therefore plane polarized.

The transmitted plane polarized light is then incident on the retarding layer 20 which has the effect of converting the plane polarized light to circularly polarized light of a particular handedness, for example left-handed circularly polarized light. The circularly polarized light is reflected by the reflector 24 which conserves the polarization of the light, converting the circularly polarized light to circularly polarized light of the opposite handedness, eg converting left-handed circularly polarized light to right-handed circularly polarized light.

The reflected light is again incident on the retarding layer 20 which converts the circularly polarized light back to plane polarized light, the change in handedness of the circularly polarized light resulting in the plane polarized light having a polarization vector perpendicular to the polarization vector of the light immediately after being polarized by passing through the liquid crystal material. Most of the reflected light will be absorbed by the dichroic dye as the polarization vector of all of the reflected light is parallel to the long axes of the dye molecules.

When the LCD is in its activated state, the director of the nematic liquid crystal material, and hence the long axes of the dye molecules, extend perpendicular to the planes of the glass substrates 10, 28. Incident unpolarized light is not absorbed by the dichroic dye molecules as the light does not have a component having a polarization vector parallel to the long axes of the dye molecules in this orientation. The light transmitted by the dichroic liquid crystal layer is therefore unpolarized. On passing through the retarding layer 20, the light remains unpolarized, as is the case on reflection and on returning through the retarding layer 20. The reflected unpolarized light is then incident on the dichroic liquid crystal layer 16 which again transmits the light as the light does not have a component having a polarization vector parallel to the long axes of the molecules.

Thus, in its inactivated state, the reflected light is greatly attenuated on passing through the dichroic liquid crystal layer 16, and the display appears dark, whereas, in its activated state, reflected light is transmitted with relatively little attenuation and the display appears light.

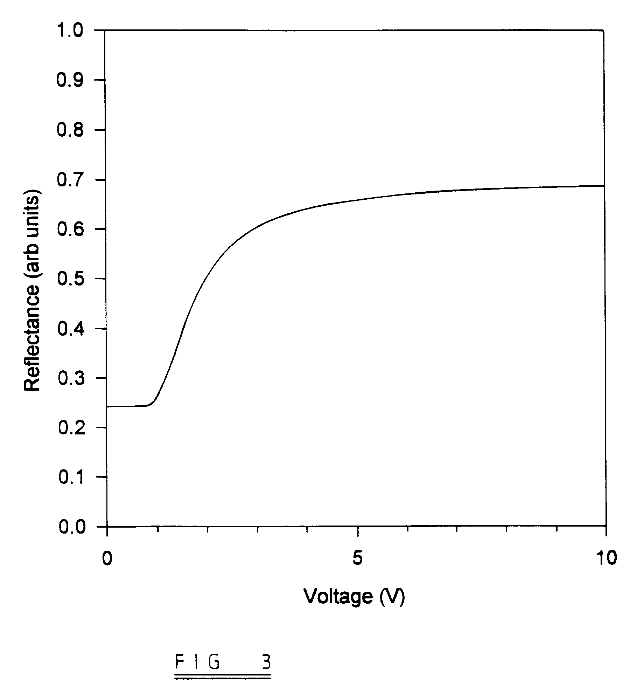

As shown in Figure 3, the LCD is capable of displaying a plurality of grey levels, the reflectivity of the LCD being related to the voltage applied to the electrodes. If a voltage between those corresponding to the fully activated and inactivated states described above is applied to the electrodes, the dichroic dye molecules become orientated so as to absorb an intermediate amount of the light having a particular polarization vector. Since only part of the light is absorbed, a reduced amount of reflected light is transmitted by the LCD resulting in the LCD having a reduced reflectivity, and hence in the production of an intermediate grey level. By suitably controlling the applied voltage, a continuous grey level or a plurality of different grey levels may be achieved.

As an alternative to using an aligned liquid crystal polymer as the phase retarding layer 20, a linear photopolymerised polymer may be used. A linear photopolymerised polymer is produced by exposing a photopolymerisable material to polarized light. Such exposure results in the production of an optically birefringent film. If a linear photopolymerised polymer is used as the retarding material, no alignment layer 22 is required.

A further alternative is to use reactive mesogens as the material of the retarding layer 20. Reactive mesogens are liquid crystal materials which can be photopolymerised in situ. To produce a retarding layer using such a material, an aligned layer of nematic reactive liquid crystal or smectic liquid crystal is polymerised by exposing the liquid crystal material to, for example, ultra-violet light. Such an exposed material forms a birefringent aligned polymer layer which, when of the correct thickness, acts as a quarter wave plate.

In the described embodiment, the reflector 24 is separate from the second electrode 26. Since the reflector 24 is metallic, the reflector 24 could be used as the second electrode 26, reducing the number of elements of the LCD and hence reducing its complexity.

Any of the above described LCDs may be used to provide a display panel or part of a display panel, for instance by arranging for at least one of the electrodes 12 and 26 to be suitably shaped and addressed. In order to control different regions of the display, suitable active switching devices, for example thin film transistors or diodes, may be used. One or more colour filters may be provided in front of the LCD in order to produce a colour display.

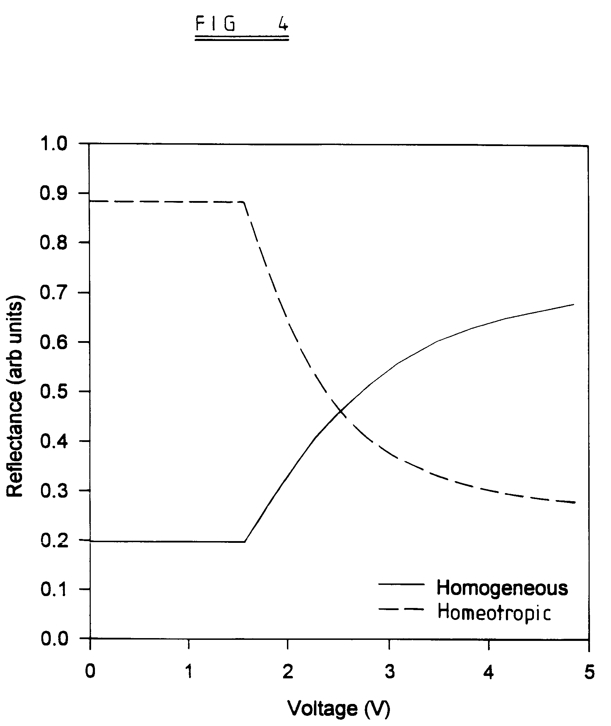

Various modifications may be made within the scope of the invention. For instance, the liquid crystal material may have a negative dielectric anisotropy. The surface layers of the liquid crystal material adjacent the aligning layers may have pretilt angles of close to but less than 90 degrees, for instance 89 degrees, with respect to the plane of the cell. In the activated state i.e. when an electric field is applied between the electrodes 12 and 26, the liquid crystal molecules are aligned substantially parallel to the plane of the cell throughout the layer 16. In the inactivated state i.e. in the absence of an electric field, the liquid crystal molecules in the layer 16 away from the surface layers are aligned substantially perpendicularly to the plane of the cell, and this effect is illustrated in Figure 4.

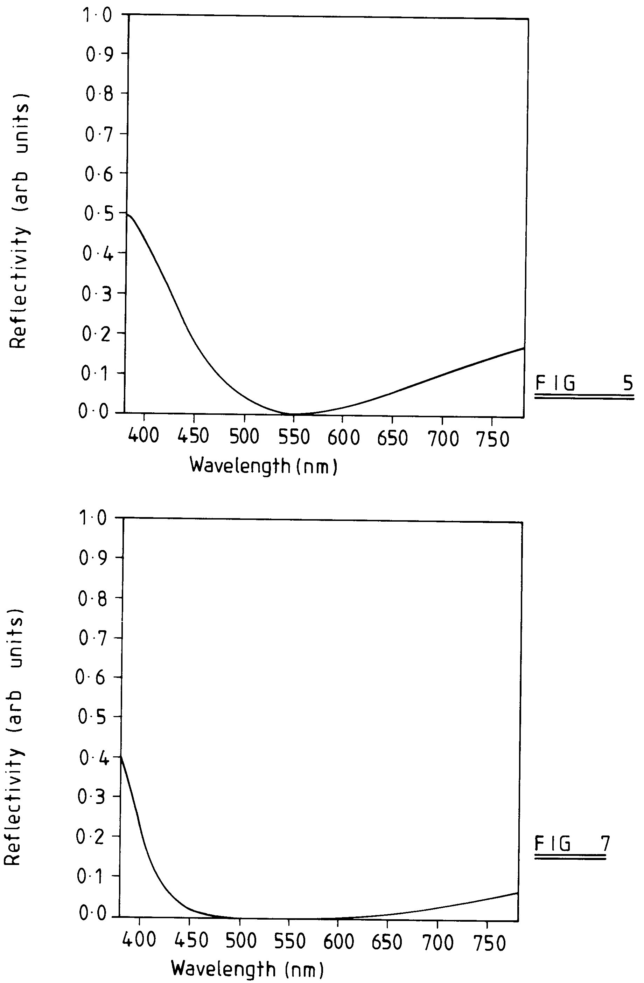

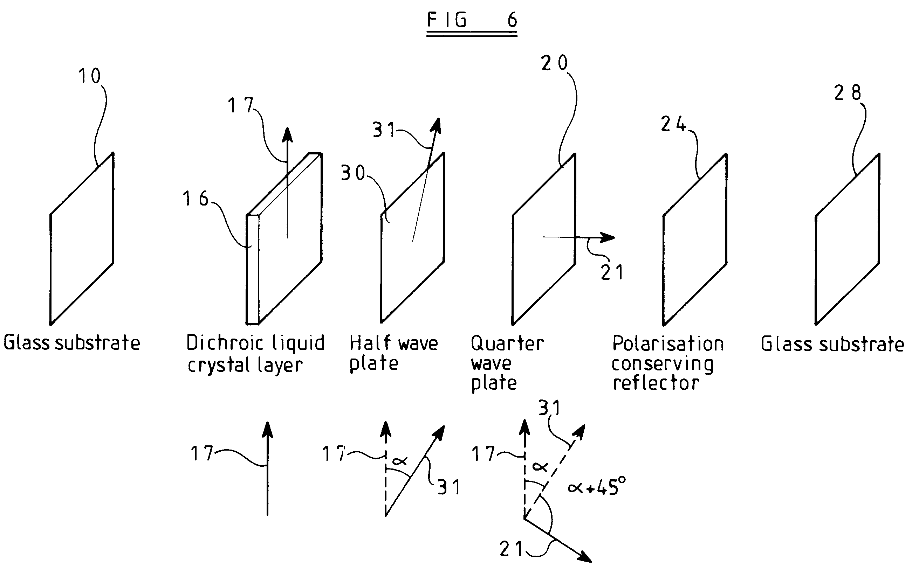

Figure 5 shows the reflectance against wavelength of light of the display shown in Figures 1 and 2 in its inactivated state.

In this state, the display is required to be as dark as possible so as to maximise its contrast ratio. Further, it is desirable for the display to be achromatic or black. However, as illustrated in Figure 5, the reflectance of the display increases towards the ends of the visible spectrum so that, in its inactivated state, the display will be dark purple rather than grey or black.

This effect may be caused by dispersion in the quarter waveplate 20 resulting in non-achromatic performance. Also, the quarter waveplate 20 acts as a true quarter waveplate at only one wavelength. The retardation of the quarter waveplate is equal to the product of the thickness of the plate and the birefringence. However, the birefringence usually decreases with increasing wavelength so that the retardation also decreases with increasing wavelength. Thus, the quarter waveplate 20 does not provide a quarter wave retardation across the whole of the visible spectrum and this results in the loss of contrast in the blue and red regions where light is not properly circularly polarised.

Figure 6 illustrates a display which differs from that shown in Figures 1 and 2 in that a further retarding layer 30 is disposed between the liquid crystal layer 16 and the quarter waveplate 20. The layer 30 may be embodied by any of the techniques described hereinbefore for embodying the quarter waveplate 20 and provides a retardance of (2n + 1)/2 of a wavelength, where n is an integer greater than or equal to 0. For n = 0, a phase retardation of approximately one half of a wavelength is produced and the layer 30 will be referred to as a half waveplate hereinafter.

The optic axis 31 of the half waveplate 30 is rotated by an angle α with respect to the polarisation vector 17 of the liquid crystal layer 16. The optic axis 21 of the quarter waveplate 20 is further rotated by (α + 45 degrees) with respect to the optic axis 31. However, these angles may be varied so as to optimise the performance of the display. The angle α can, in principle, take any value except 0° and multiples of 90 degrees. However, a value of 15 degrees has been found to give optimum reflectivity. Similarly, although the half waveplate 30 and the quarter waveplate 20 may be "tuned" to a wavelength of 550nm, the tuning may also be varied to optimise performance.

Figure 7 illustrates the reflectance against wavelength performance for the display of Figure 6. Compared with the performance shown in Figure 5 for the display of Figures 1 and 2, the reflectivity of the display shown in Figure 6 is substantially improved across the visible spectrum. The contrast ratio is thus improved, particularly in the red and blue regions of the spectrum so that a substantial improvement in a achromaticity is provided by the display of Figure 6.

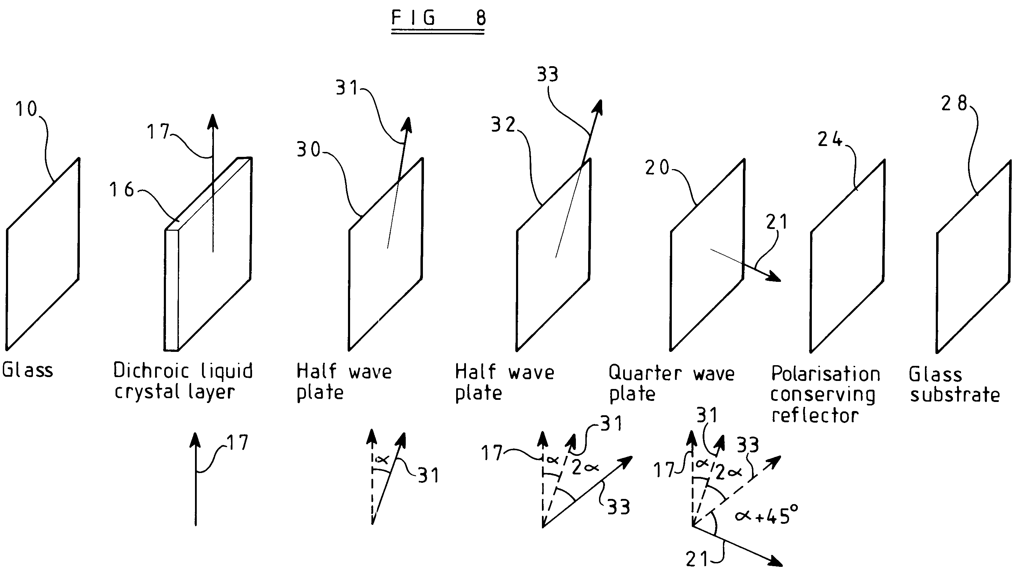

A plurality of half waveplates may be disposed between the liquid crystal layer 16 and the quarter waveplate 20 and two such half waveplates are shown in the display of Figure 8. The contrast ratio and achromaticity of the display increases with the number of half waveplates. In such arrangements, the optic axes of adjacent half waveplates 30 and 32 are angularly spaced by 2 α, where the optic axis 31 of the half waveplate 30 adjacent the liquid crystal layer 16 is rotated by a relative to the polarisation vector 17 of the layer 16. As in the display of Figure 6, the optic axis 21 of the quarter waveplate 20 is rotated by (α + 45 degrees) relative to the optic axis 33 of the adjacent half waveplate 32. Again, performance may be improved by varying the angles of the optic axes and varying the tuning of the half waveplates 30 and 32 and the quarter waveplate 20.
A value of 9° for α has been found to provide optimum reflectivity with two half waveplates.

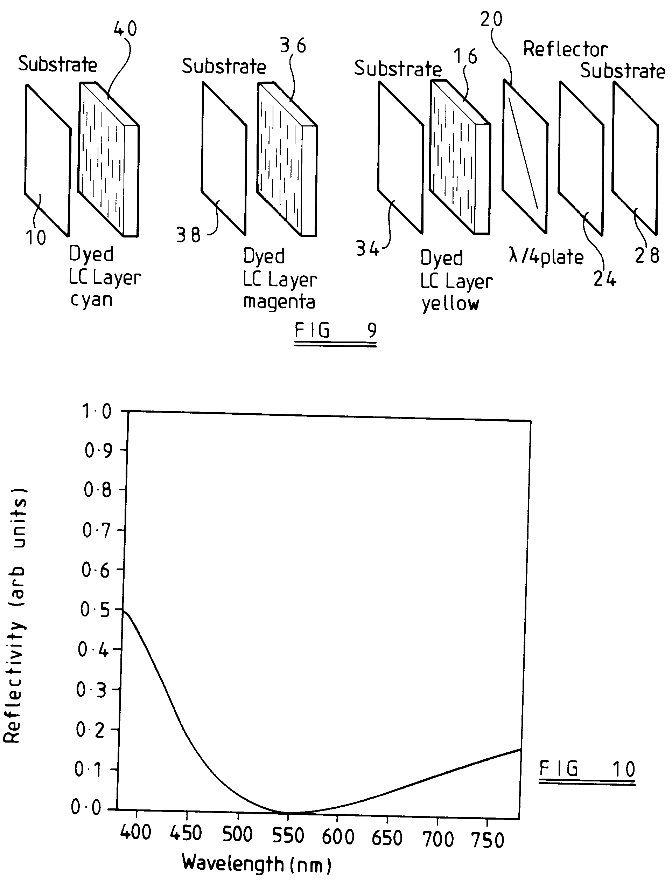

Figure 9 illustrates a liquid crystal display which is capable of providing full colour operation. The display differs from that shown in Figures 1 and 2 in that further substrates 34 and 38 and further dichroic liquid crystal layers 36 and 40 (with associated alignment layers and electrodes) are disposed between the liquid crystal layer 16 and the substrate 10. The dichroic dies of the liquid crystal layers 16, 36, and 40 are absorptive to blue, green, and red light, respectively. For a pixelated display, the pixels of the liquid crystal layers 16, 36, and 40 are aligned with each other. The quarter waveplate 20 provides a quarter wave of retardation at the centre or green region of the visible spectrum, for instance at 550nm. The liquid crystal layers are disposed so that their polarisation axes are parallel.

Figure 10 illustrates the performance of the display of Figure 9 in the inactivated or black state. As described hereinbefore, the reflectance of the display increases in the blue and red regions of the spectrum because light passing through the quarter waveplate 20 in these regions is not properly circularly polarised. Thus, the quarter waveplate is not sufficiently "broad band" to provide a quarter wave retardation across the whole of the visible spectrum.

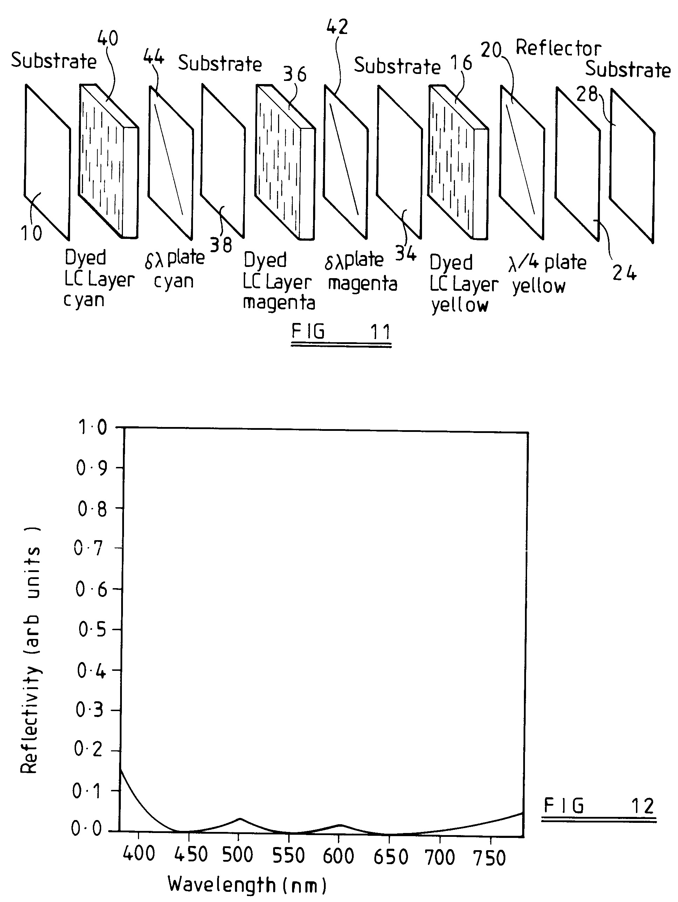

Figure 11 shows another full colour display which differs from the display of Figure 9 in that the quarter waveplate 20 is tuned to provide a quarter wave retardance in the yellow part of the visible spectrum and further retarding layers or plates 42 and 44 are provided. The quarter waveplate 20 is tuned so as to cooperate with the liquid crystal layer 16 which is dyed yellow and requires the lowest retardation. The δ λ plate 42 is arranged to provide retardation which, when added to the retardation of the yellow quarter waveplate 20, provides a quarter wave of retardation for the magenta liquid crystal layer 36. Similarly, the δ λ plate 44 provides further retardation which, when added to the retardations provided by the plates 20 and 42, provides a quarter wave of retardation for the cyan liquid crystal layer 40.

Figure 12 illustrates the reflectivity against wavelength performance for the inactive or black state of the display shown in Figure 11. With the optic axes of the plates 20, 42, and 44 parallel to each other and at 45 degrees to the polarisation vectors of the liquid crystal layers 16, 36, and 40, and with the retardations provided by the plates 20, 42, and 44 arranged, taking into account retardation in the liquid crystal layers, to correspond to a quarter wave of retardation at about 450nm (yellow), 550nm (magenta), and 650nm (cyan), the improved performance shown in Figure 12 is achieved. In particular, the reflectance of the display is reduced so as to improve contrast ratio throughout the visible spectrum and especially at the extremes of the visible spectrum. Thus, the achromaticity of the dark state of the display is improved compared with the display shown in Figure 9.

Although the polarisation vectors of the liquid crystal layers in the embodiments of Figures 9 and 11 are arranged to be parallel to each other, in alternative embodiments, the polarisation vectors of the liquid crystal layers may be arranged at 90 degrees.

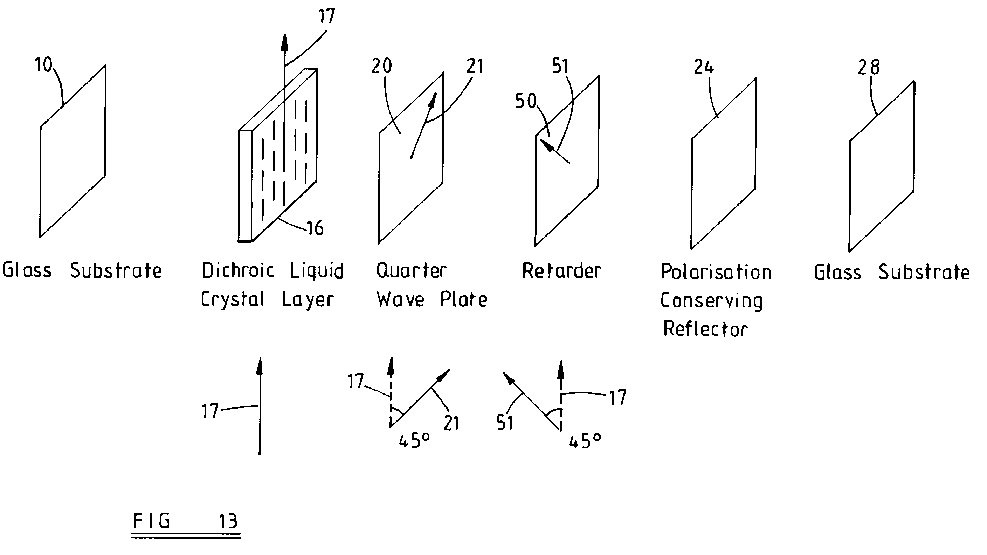

The display shown in Figure 13 differs from that shown in Figure 2 in that a retarder 50 is disposed between the quarter waveplate 20 and the polarisation conserving reflector 24. The retarder 50 has an optic axis 51 angled at 45 degrees to the director of the nematic liquid crystal material when in its inactivated state. However, the angle of the optic axis 51 is rotated in the direction opposite that of the angle of the optic axis 21 with respect to the polarisation vector 17 of the liquid crystal layer 16.

As described hereinbefore with reference to Figure 2, the phase retardation of the layer 20 is approximately (2n + 1)/4 of a wavelength, where n is an integer greater than or equal to zero. The retarder 50 produces a phase retardation of approximately (2r + 1)/4 of a wavelength, where r is an integer and is equal to n + 1.

The optic axes of the layer 20 and the retarder 50 are perpendicular so that the retardations produced thereby subtract to leave a net retardation of a quarter of a wavelength. However, the layer 20 and the retarder 50 are made of materials having different dispersions. Thus it is possible to provide a quarter of a wavelength of retardation across a substantial part of the visible spectrum and therefore to improve the achromaticity of the dark state of the display.

## Claims

1. A liquid crystal display comprising first and second substrates (10, 28) and a liquid crystal layer (16) disposed between the first and second substrates (10, 28) and including a liquid crystal and a dichroic dye, characterised by a polarisation-conserving reflector (24) disposed between the liquid crystal layer (16) and one of the substrates (28), and a retarding layer (20) disposed between the liquid crystal layer (16) and reflector (24).

2. A liquid crystal display as claimed in Claim 1, characterised in that the retarding layer (20) is in contact with the liquid crystal layer (16).

3. A liquid crystal display as claimed in Claim 1 or 2, characterised in that the reflector (24) is in contact with the retarding layer (20).

4. A liquid crystal display as claimed in any one of the preceding claims, characterised in that the reflector (24) is electrically conductive and constitutes an electrode of the display.

5. A liquid crystal display as claimed in any one of the preceding claims, characterised in that the retarding layer (20) is a (2n + 1)/4 wave plate, where n is an integer greater than or equal to 0.

6. A liquid crystal display as claimed in any one of the preceding claims, characterised in that the retarding layer (20) has an optic axis (21) disposed at 45 degrees to a polarisation vector (17) of the liquid crystal layer (16).

7. A liquid crystal display as claimed in any one of Claims 1 to 5, characterised by a further retarding layer (30) disposed between the liquid crystal layer (16) and the retarding layer (20).

8. A liquid crystal display as claimed in Claim 7, characterised in that the further retarding layer (30) has an optic axis (31) disposed at an angle α to a polarisation vector (17) of the liquid crystal layer (16) and the retarding layer (20) has an optic axis disposed at (α + 45 degrees) to the optic axis (31) of the further retarding layer (30).

9. A liquid crystal display as claimed in any one of Claims 1 to 5, characterised by m further retarding layers (30, 32), where m is an integer greater than one, disposed in order between the liquid crystal layer (16) and the retarding layer (20).

10. A liquid crystal display as claimed in Claim 9, characterised in that the first further retarding layer (30) has an optic axis (31) disposed at an angle α to a polarisation vector (17) of the liquid crystal layer (17), the retarding layer (20) has an optic axis (21) disposed at (α + 45 degrees) to the optic axis (33) of the mth further retarding layer (32), and each pth further retarding layer (32) has an optic axis (33) disposed at 2α to the optic axis (31) of the (p-1)th further retarding layer (30).

11. A liquid crystal display as claimed in any one of Claims 7 to 10, characterised in that the or each further retarding layer (30, 32) is a (2q + 1)/2 wave plate, where q is an integer greater than or equal to 0.

12. A liquid crystal display as claimed in any one of the preceding claims, characterised in that the or each retarding layer (20, 30, 32) comprises an aligned liquid crystal polymer layer.

13. A liquid crystal display as claimed in any one of Claims 1 to 11, characterised in that the or each retarding layer (20, 30, 32) comprises a linear photopolymerised polymer layer.

14. A liquid crystal display as claimed in any one of Claims 1 to 11, characterised in that the or each retarding layer (20, 30, 32) comprises an aligned photopolymerised nematic or smectic reactive liquid crystal layer.

15. A liquid crystal display as claimed in any one of the preceding claims, characterised by at least one colour filter.

16. A liquid crystal display as claimed in any one of Claims 1 to 14, characterised by at least one further liquid crystal layer (36,40) disposed between the liquid crystal layer (16) and the first substrate (10), the or each further liquid crystal layer (36, 40) including a liquid crystal and a dichroic dye.

17. A liquid crystal display as claimed in Claim 16, characterised in that the liquid crystal layer (16) and the or each further liquid crystal layer (36, 40) have parallel polarisation vectors.

18. A liquid crystal display as claimed in Claim 16, characterised in that the liquid crystal layer (16) and the or each further liquid crystal layer (36, 40) have polarisation vectors which are substantially perpendicular.

19. A liquid crystal display as claimed in any one of Claims 16 to 18, characterised in that the dichroic dyes of the liquid crystal layers (16, 36, 40) are light-absorptive in different regions of the visible spectrum.

20. A liquid crystal display as claimed in Claim 19, characterised by a respective additional retarding layer (42, 44) disposed between the or each adjacent pair of liquid crystal layers (16, 36, 40).

21. A liquid crystal display as claimed in Claim 20, characterised in that the total retardance of the retarding layer (20) or layers (20 + 42, 20 + 42 + 44) between each of the liquid crystal layers (16, 36, 40) and the reflector (24) corresponds to the light-absorptive region of the liquid crystal layer (16, 36, 40).

22. A liquid crystal display as claimed in Claim 20 or 21, characterised in that the retarding layer (20) and the or each additional retarding layer (42, 44) have parallel optic axes.

23. A liquid crystal display as claimed in any one of the preceding claims, characterised in that the liquid crystal of the or each liquid crystal layer (16, 36, 40) comprises a nematic liquid crystal material within which the dichroic dye is dissolved.

24. A liquid crystal display as claimed in any one of the preceding claims, characterised in that the or each liquid crystal layer (16, 36, 40) comprises first and second alignment surfaces (14, 22) with the liquid crystal and the dichroic dye disposed therebetween.

25. A liquid crystal display as claimed in Claim 24, characterised in that the alignment surfaces (14, 22) comprise anti-parallel rubbed surfaces and the liquid crystal material is of positive dielectric anisotropy.

26. A liquid crystal display as claimed in Claim 24, characterised in that the alignment surfaces (14, 22) are arranged to induce pretilt angles of close to but less than 90 degrees and the liquid crystal material is of negative dielectric anisotropy.

27. A liquid crystal display as claimed in Claim 24, characterised in that the alignment surfaces (14, 22) comprise parallel rubbed surfaces and the liquid crystal material is of positive dielectric anisotropy.

28. A liquid crystal display as claimed in Claim 5, characterised by a further retarding layer (50) disposed between the liquid crystal layer (16) and the retarding layer (20) and having an optic axis (51) substantially perpendicular to an optic axis (21) of the retarding layer (20) and at substantially 45 degrees to a polarisation vector (17) of the liquid crystal layer (16).

29. A liquid crystal display as claimed in Claim 28, characterised in that the further retarding layer (50) is a (2r + 1)/4 waveplate, where r is an integer greater than n.

30. A liquid crystal display as claimed in Claim 29, characterised in that r is equal to n + 1.

31. A liquid crystal display as claimed in any one of the preceding claims, characterised by at least one thin film transistor formed integrally with the display.
